# EUROPÄISCHE PATENTANMELDUNG

(11) **EP 2 896 552 A2**
(43) Veröffentlichungstag der Anmeldung: **22.07.2015**
(21) Anmeldenummer: 15151427.0
(22) Anmeldetag: 16.01.2015
(51) Int. Cl.: B62K 3/00, B62M 1/36, B62K 15/00, B62K 21/16, B62L 1/04

(54) **Zweirädriges Fahrzeug**

(30) Priorität: 16.01.2014 DE 202014000405 U
(71) Anmelder: Philipp, Dieter, 80995 München (DE); Mauracher, Hermann, 81249 München (DE); Santin-Otto, Corinna, 82110 Germering (DE)
(72) Erfinder: Mauracher, Hermann, 81249 München (DE)
(74) Vertreter: Weickmann & Weickmann

(57) **Zusammenfassung**

Die vorliegende Erfindung betrifft ein zweirädriges Fahrzeug 2, umfassend ein Vorderrad 4, ein Hinterrad 6, einen Lenker 8 zum Lenken des Fahrzeugs 2, eine Stehfläche 10, einen Sitz 12 und eine mit von der Stehfläche 10 separaten Pedalen 16; 16' versehene Pedaleinheit 14; 14', wobei das Fahrzeug 2 dafür eingerichtet ist, von einem Fahrer auf der Stehfläche 10 stehend durch Abstoßen von einem Untergrund fortbewegt zu werden, wobei das Hinterrad 6 ferner dafür eingerichtet ist, von einem Fahrer auf dem Sitz 12 sitzend durch Bewegen der Pedale 16; 16' angetrieben zu werden, dadurch gekennzeichnet, dass die Pedaleinheit 14; 14' näher an dem Vorderrad 4 als dem Hinterrad 6 angeordnet ist. Ferner betrifft die vorliegende Erfindung ein zweirädriges Fahrzeug 2 mit einem Vorderrad 4, einem Hinterrad 6, einem Lenker 8 zum Lenken des Fahrzeugs 2 und einem Sitz 12, wobei das Fahrzeug 2 einen Transportzustand und einen Betriebszustand aufweist, wobei im Betriebszustand mindestens ein Außenmaß Q, H des Fahrzeugs 2 größer ist als im Transportzustand, wobei bei einem Übergang von dem Betriebszustand in den Transportzustand der Sitz 12 an dem Fahrzeug 2 abgeklappt wird, dadurch gekennzeichnet, dass ein Abstand des Vorderrades 4 zu dem Hinterrad 6 in dem Betriebszustand und dem Transportzustand gleich groß ist.

## Beschreibung

Die vorliegende Erfindung betrifft ein zweirädriges Fahrzeug, umfassend ein Vorderrad, ein Hinterrad, einen Lenker zum Lenken des Fahrzeugs, eine Stehfläche, einen Sitz und eine mit von der Stehfläche separaten Pedalen versehene Pedaleinheit, wobei das Fahrzeug dafür eingerichtet ist, von einem Fahrer auf der Stehfläche stehend durch Abstoßen von einem Untergrund fortbewegt zu werden, wobei das Hinterrad ferner dafür eingerichtet ist, von einem Fahrer auf dem Sitz sitzend durch Bewegen der Pedale angetrieben zu werden.

Ferner betrifft die vorliegende Erfindung ein zweirädriges Fahrzeug mit einem Lenker zum Lenken des Fahrzeugs und einem Sitz, wobei das Fahrzeug einen Transportzustand und einen Betriebszustand aufweist, wobei im Betriebszustand mindestens ein Außenmaß des Fahrzeugs größer ist als im Transportzustand, wobei bei einem Übergang von dem Betriebszustand in den Transportzustand der Sitz an dem Fahrzeug abgeklappt wird.

Insbesondere in Großstädten ist es von Vorteil, sich mit einem kleinen zweirädrigen Fahrzeug aufgrund der mangelnden Parkmöglichkeiten fortzubewegen. Es ist auch noch besonders vorteilhaft, wenn man das zweirädrige Fahrzeug einfach in die öffentlichen Verkehrsmittel mitnehmen kann, um besonders lange Strecken zu bewältigen. In den meisten Fällen wird ein Tretroller oder ein Klappfahrrad für derartige Zwecke verwendet. Tretroller haben jedoch den Nachteil, dass sie bedingt durch ihre Antriebsweise keine besonders hohen Geschwindigkeiten erreichen können, insbesondere wenn bergauf gefahren wird. Klappfahrräder eignen sich aufgrund der verglichen mit dem Tretroller höheren Fahrgeschwindigkeit dazu, längere Fahrtabschnitte zu bewältigen, haben jedoch das Problem, dass der Klappmechanismus häufig kompliziert ist und aufgrund des notwendigen Aufsteigens auf das Fahrrad, um eine Position einzunehmen, in welcher man die Pedale treten kann, man nicht in der Lage ist, schnell auf das Fahrrad aufzuspringen, um eine kurze Strecke, beispielsweise innerhalb eines Bahnhofs, zu bewältigen. In derartigen Situationen haben sich Tretroller als praktischer herausgestellt, da das Absteigen und Aufsteigen auf einen solchen Tretroller im Wesentlichen keine Zeit beansprucht.

Es sind auch Versuche unternommen worden, Tretroller mit Fahrrädern zu kombinieren, jedoch sind aufgrund der geringen Abmessungen bei derartigen Kombinationen die Pedale direkt unterhalb des Sitzes angeordnet, wodurch eine sehr unbequeme Position beim Treten der Pedale vom Fahrer eingenommen wird. Bei einem Fahrrad ist das Tretlager üblicherweise durch eine Schrägstellung des Sattelrohrs gegenüber dem Sitz nach vorne in Fahrtrichtung verschoben, wodurch eine bequeme Fahrposition eingenommen werden kann. Diese Anordnung verhindert jedoch eine sinnvolle Anordnung einer Stehfläche.

Eine Aufgabe der vorliegenden Erfindung ist die Bereitstellung eines zweirädrigen Fahrzeugs, welches zu der ersten oben aufgeführten Gattung gehört, bei welchem der Fahrer eine ergonomische Tretposition einnehmen kann. Eine zweite Aufgabe der vorliegenden Erfindung ist die Bereitstellung eines zweirädrigen Fahrzeugs, welches zur zweiten oben aufgeführten Gattung gehört, welches besonders einfach und zuverlässig aufgebaut ist.

Die erste Aufgabe wird gelöst durch ein zweirädriges Fahrzeug, umfassend ein Vorderrad, ein Hinterrad, einen Lenker zum Lenken des Fahrzeugs, eine Stehfläche, einen Sitz und eine mit von der Stehfläche separaten Pedalen versehene Pedaleinheit, wobei das Fahrzeug dafür eingerichtet ist, von einem Fahrer auf der Stehfläche stehend durch Abstoßen von einem Untergrund fortbewegt zu werden, wobei das Hinterrad ferner dafür eingerichtet ist, von einem Fahrer auf dem Sitz sitzend durch Bewegen der Pedale angetrieben zu werden, dadurch gekennzeichnet, dass die Pedaleinheit näher an dem Vorderrad als dem Hinterrad angeordnet ist. Dadurch, dass die Pedaleinheit näher an dem Vorderrad als an dem Hinterrad angeordnet ist, kann der Fahrer eine ergonomische Position einnehmen.

Vorzugsweise ist das erfindungsgemäße zweirädrige Fahrzeug dadurch gekennzeichnet, dass die Pedaleinheit, vorzugsweise ein Tretlager der Pedaleinheit, oberhalb der Stehfläche angeordnet ist. Besonders bevorzugt ist die Pedaleinheit oder ihr Tretlager auf Höhe einer Drehlagerung des Lenkers, insbesondere auf Höhe eines Steuersatzes des Lenkers, angeordnet. Eine derartige Anordnung erlaubt eine besonders ergonomische Sitzposition des Fahrers beim Betätigen der Pedale. Die Pedale sind vorzugsweise in einer Höhe angebracht, in welcher diese weder mit dem Vorderrad noch mit dem Boden kollidieren, beziehungsweise in welcher diese das Vorderrad oder den Boden nicht berühren. Vorzugsweise wird das Vorderrad zum lenken des zweirädrigen Fahrzeugs verwendet.

Im Rahmen der Erfindung kann daran gedacht sein, dass ein das Hinterrad mit der Pedaleinheit verbindender Antriebsstrang eine Umlenkung aufweist, welche bevorzugt näher am Vorderrad als am Hinterrad angeordnet ist, sodass ein erster Abschnitt des Antriebsstrangs von dem Hinterrad zu der Umlenkung verläuft und ein zweiter Abschnitt des Antriebsstrangs von der Umlenkung zu der Pedaleinheit verläuft, wobei der zweite Abschnitt des Antriebsstrangs aufwärts verläuft. Vorzugsweise verläuft der erste Abschnitt des Antriebsstrangs im Wesentlichen parallel zu der Stehfläche und/oder im Wesentlichen parallel zu einer ebenen Verbindung der Straßenauflagepunkte des Hinterrades und des Vorderrades. Eine derartige Ausgestaltung des Antriebsstrangs erlaubt das Vorsehen einer tief angeordneten Stehfläche, was die Stabilität bei der Benutzung des zweirädrigen Fahrzeugs als Tretroller erhöht. Währenddessen ist die Pedaleinheit derart angeordnet, dass der Fahrer beim Treten der Pedale eine ergonomische Sitzposition einnimmt.

Weist das zweirädrige Fahrzeug den oben beschriebenen Antriebsstrang auf, so ist es möglich, dass der Antriebsstrang eine Antriebskette und die Umlenkung, bevorzugt für jeden Strang der Antriebskette an der Umlenkung, ein Zahnrad umfasst.

Das zweirädrige Fahrzeug kann so ausgebildet sein, dass das Hinterrad eine Laufflächenbremse und eine Bremse ausgewählt aus einer Rücktrittbremse, einer Scheibenbremse und einer Felgenbremse aufweist. Die Laufflächenbremse, welche vorzugsweise aus einem Reibungskörper besteht, der auf die Straßenauflagefläche eines Rades heruntergedrückt wird, erlaubt es dem Fahrer, in gewohnter Art und Weise während des Benutzens des zweirädrigen Fahrzeugs als ein Tretroller zu bremsen. Die Kombination der Laufflächenbremse mit einer weiteren Bremse erhöht die Sicherheit des zweirädrigen Fahrzeugs während es wie ein Fahrrad mittels der Pedaleinheit angetrieben wird und hierbei häufig eine höhere Geschwindigkeit als ein Tretroller erreicht.

Ferner kann bei dem zweirädrigen Fahrzeug das Vorderrad eine Scheibenbremse, eine Laufflächenbremse oder eine Felgenbremse aufweisen. Durch das Vorsehen einer der oben genannten Bremsen an dem Vorderrad wird die Sicherheit des zweirädrigen Fahrzeugs zusätzlich erhöht.

Ferner ist es möglich, dass das zweirädrige Fahrzeug derart ausgebildet ist, dass der Sitz im Wesentlichen oberhalb einer Rotationsachse des Hinterrades angeordnet ist und/oder vorzugsweise in seiner Höhe oder/und in Fahrtrichtung verstellbar angeordnet ist. Hierdurch kann die Position des Sitzes angepasst werden, sodass der Fahrer sich eine ergonomische und für ihn bequeme Sitzposition einstellen kann.

Die zweite Aufgabe der vorliegenden Erfindung wird gelöst durch ein zweirädriges Fahrzeug mit einem Vorderrad, einem Hinterrad, einem Lenker zum Lenken des Fahrzeugs und einem Sitz, wobei das Fahrzeug einen Transportzustand und einen Betriebszustand aufweist, wobei im Betriebszustand mindestens ein Außenmaß des Fahrzeugs größer ist als im Transportzustand, wobei bei einem Übergang von dem Betriebszustand in den Transportzustand der Sitz an dem Fahrzeug abgeklappt wird, dadurch gekennzeichnet, dass ein Abstand eines Vorderrades zu einem Hinterrad in dem Betriebszustand und dem Transportzustand gleich groß ist. Dadurch, dass beim Übergang von dem Betriebszustand in den Transportzustand der Sitz an dem Fahrzeug abgeklappt wird, wird in einer besonders einfachen Art und Weise die Größe des zweirädrigen Fahrzeugs reduziert. Ferner bleibt die Anordnung des Hinterrades zu dem Vorderrad beim Abklappen unberührt, sodass tragende Elemente des zweirädrigen Fahrzeugs, welche beim Antrieb eine wichtige Rolle spielen, beispielsweise eine Rahmenverbindung von einem Ausfallende zu dem Steuersatz, wobei in der Rahmenverbindung vorzugsweise das Tretlager aufgenommen ist, keinen Klappmechanismus aufweisen, was die Stabilität erhöht und die Kosten reduziert.

Ein zweirädriges Fahrzeug, welches die zweite Aufgabe der vorliegenden Erfindung löst, kann sich dadurch auszeichnen, dass bei einem Übergang von dem Betriebszustand in den Transportzustand der Sitz an dem Fahrzeug unter Verwendung eines ersten Scharniers abgeklappt wird. Die Verwendung eines ersten Scharniers erlaubt eine besonders einfache und kostengünstige Ausführung des zweirädrigen Fahrzeugs.

Ferner kann bei einem zweirädrigen Fahrzeug, welches die zweite Aufgabe der vorliegenden Erfindung löst, daran gedacht sein, dass bei einem Übergang von dem Betriebszustand in den Transportzustand der Lenker, bevorzugt unter Verwendung eines zweiten Scharniers, an dem Fahrzeug abgeklappt wird. Wenn sowohl der Sitz als auch der Lenker an dem Fahrzeug abgeklappt werden, weist das zweirädrige Fahrzeug in dem Transportzustand ein besonders stark reduziertes Außenmaß auf.

Ein zweirädrigen Fahrzeug, welches die zweite Aufgabe der vorliegenden Erfindung löst, kann auch Merkmale des zweirädrigen Fahrzeugs aufweisen, welches die erste Aufgabe der vorliegenden Erfindung löst.

Ein zweirädriges Fahrzeug, welches die erste oder zweite Aufgabe löst, kann von einem Fahrer vorzugsweise ähnlich einem gewöhnlichen Fahrrad oder ähnlich einem gewöhnlichen Tretroller stehend, sitzend, sich abstoßend und vorzugsweise, wenn eine mit von einer Stehfläche des zweirädriges Fahrzeug separaten Pedalen versehene Pedaleinheit an dem zweirädriges Fahrzeug vorgesehen ist, auch die Pedale tretend bewegt werden. Ferner kann ein zweirädriges Fahrzeug, welches die erste oder zweite Aufgabe löst, mit bekanntem Zubehör für Fahrräder oder Tretroller ausgestattet sein, um die Sicherheit der Benutzung zu erhöhen oder um eine vielseitige Verwendung des zweirädrigen Fahrzeug zu ermöglichen. Zu derartigem Zubehör zählen insbesondere Nabenschaltungen, Vorderlichter, Rücklichter, Reflektoren, manuell betätigbare Bremsen, Gepäckträger und Ähnliches.

Wird im Rahmen dieser Anmeldung von Abständen in Bezug auf das Vorderrad gesprochen, so ist damit der Abstand zu dem Vorderrad zu verstehen, wenn das Vorderrad zentriert ist, sich also in einer Stellung befindet, welche in dem Betriebszustand zu keiner Abweichung von einer Geradeaus-Fahrt führen würde.

Im Folgenden wird eine Ausführungsform der vorliegenden Erfindung unter Bezugnahme auf die beigefügten Zeichnungen beschrieben, es zeigen:
- Fig.1: eine schematische Darstellung einer ersten Ausführungsform des erfindungsgemäßen zweirädrigen Fahrzeugs im Betriebszustand,
- Fig. 2: eine schematische Darstellung eines Antriebsstrangs des zweirädrigen Fahrzeugs aus Fig. 1,
- Fig. 3: eine schematische Darstellung des zweirädrigen Fahrzeugs aus Fig. 1 im Transportzustand,
- Fig. 4: eine schematische Darstellung eines Antriebsstrangs einer zweiten Ausführungsform des erfindungsgemäßen zweirädrigen Fahrzeugs,
- Fig. 5a: eine vergrößerte schematische Darstellung eines Doppelzahnrads und eine Kenttenspanners des Antriebsstrangs aus Fig. 4, und
- Fig. 5b: eine weitere vergrößerte schematische Darstellung eines Doppelzahnrads aus Fig. 4.

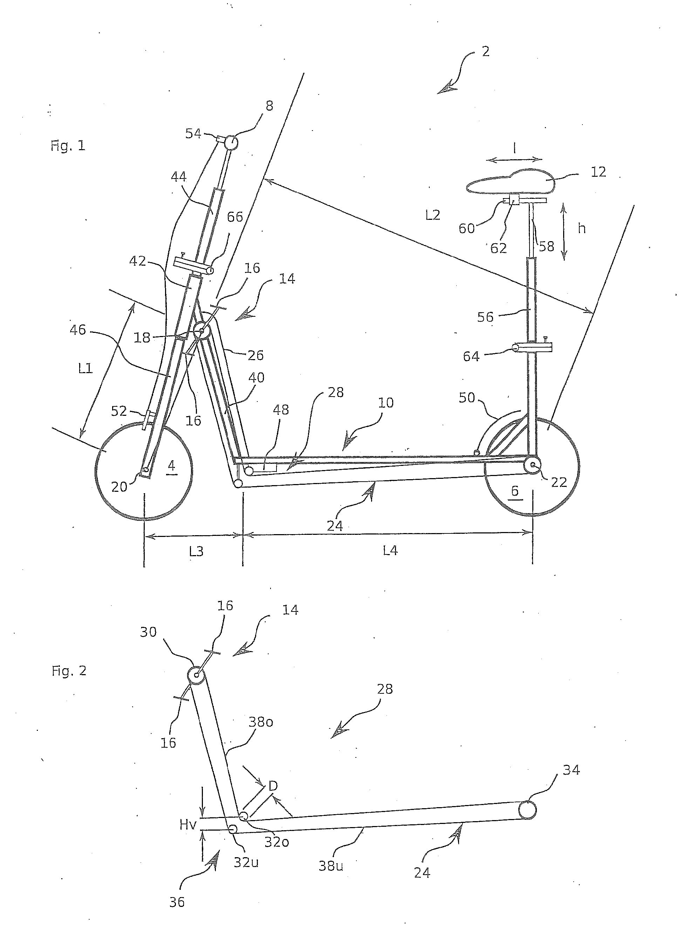

Figur 1 zeigt eine erste Ausführungsform eines erfindungsgemäßen zweirädrigen Fahrzeugs 2, welches sowohl die erste als auch die zweite Aufgabe der vorliegenden Erfindung löst. Das zweirädrige Fahrzeug 2 umfasst ein Vorderrad 4, ein Hinterrad 6, einen Lenker 8, mit welchem das zweirädrige Fahrzeug gelenkt wird, eine Stehfläche 10, einen Sitz 12, eine Pedaleinheit 14 mit Pedalen 16 und einem Tretlager 18. Gemessen von dem Tretlager 18 ist der Abstand L1 zu einer Drehachse 20 des Vorderrades 4 größer als der Abstand L2 des Tretlagers 18 zu einer Drehachse 22 des Hinterrades 6. Ein Fahrer kann das zweirädrige Fahrzeug auf mehrere Arten fahrend bewegen: er kann sich auf die Stehfläche 10 stellen und sich dann vom Boden mit einem Bein abstoßen, um vorwärts zu kommen oder auf der Stehfläche 10 stehend rollen. Eine derartige Bewegung ist dann besonders vorteilhaft, wenn es darum geht schnell auf das zweirädrige Fahrzeug, wie auf einen Tretroller, aufzusteigen und von ihm abzusteigen. Ferner kann der Fahrer sich auf den Sitz 12 setzen und er kann die Pedale 16 bewegen, um das Hinterrad 6 anzutreiben. Um den Fahrkomfort zu erhöhen, kann daran gedacht sein, eine Gangschaltung vorzusehen, beispielsweise eine Nabenschaltung in dem Hinterrad 6 oder, wenn die Pedaleinheit 14 über eine Antriebskette 24 mit dem Hinterrad 6 verbunden ist, kann auch eine Kettenschaltung mit einem oder zwei Umwerfern verwendet werden. Vorzugsweise wird eine einzelne Antriebskette 24 verwendet. Ist die Pedaleinheit 14, welche die Pedale 16 und das Tretlager 18 umfasst, oberhalb der Stehfläche 10 angeordnet, kann der Fahrer bequem seine Beine vom Sitz 12 aus auf die Pedale 16 legen und somit eine ergonomische Fahrposition einnehmen. Insbesondere kann daran gedacht sein, die Pedaleinheit 14 und die Antriebskette 24 mit einem Kettenschutz 26 zu versehen, welcher einerseits einen Schutz vor Verschmutzung durch die Antriebskette 24 bietet, vorteilhafterweise aber auch dafür eingerichtet ist, als Fußablage für den auf dem Sitz 12 sitzenden Fahrer zu dienen.

In der in Figur 1 gezeigten ersten Ausführungsform ist die Pedaleinheit 14 mit dem Hinterrad 6 durch einen Antriebsstrang 28 verbunden, welcher eine Antriebskette 24, ein mit den Pedalen 16 verbundenes Antriebszahnrad 30, Umlenkzahnräder 32u und 32o sowie ein angetriebenes Zahnrad 34 umfasst. Die Umlenkzahnräder 32u und 32o sind Teil einer Umlenkung 36, welche den Antriebsstrang 28 in einen ersten Abschnitt, welcher von dem Hinterrad 6 zu der Umlenkung 36 verläuft, und einen zweiten Abschnitt, welcher von der Umlenkung 36 aufwärts zur Pedaleinheit 14 verläuft, unterteilt. Im Kontext dieser Anmeldung ist unter dem Begriff "aufwärts" bei einem, wie in Figur 1 dargestellten, fahrbereiten zweirädrigen Fahrzeug 2' im Wesentlichen "nach oben" zu verstehen. Besonders bevorzugt ist, wie in der in Figur 1 gezeigten ersten Ausführungsform, das obere Umlenkzahnrad 32o einem oberen Strang 38o der Antriebskette 24 zugeordnet und das untere Umlenkzahnrad 32u ist einem unteren Strang 38u der Antriebskette 24 zugeordnet.

Die Stehfläche 10 oder ein unter ihr verlaufendes Rahmenelement (nicht gezeigt) ist mittels eines aufsteigenden Rohres 40 mit dem Steuersatz 42 verbunden, welcher als eine Drehlagerung des Lenkers 8 mit einer Lenkstange 44 und einer Gabel 46 dient. Die Lenkstange 44, und somit der Lenker 8, ist vorzugsweise höhenverstellbar. Die Pedaleinheit 14 und insbesondere das Tretlager 18 ist auf Höhe des Steuersatzes 42 angebracht. In der in Figur 1 gezeigter Ausführungsform ist das Tretlager 18 von dem Sitz 12 aus betrachtet vor dem Steuersatz 42 und vor der Lenkstange 44 angeordnet. Es kann jedoch auch daran gedacht sein, das Tretlager 18 von dem Sitz 12 aus betrachtet hinter dem Steuersatz 42 und hinter der Lenkstange 44 anzuordnen, wodurch der Abstand zwischen dem Sitz 12 und dem Tretlager 18 verglichen mit deren Abstand in der in Figur 1 dargestellten Ausführungsform größer ist, hierdurch kann auch ein besonders großer Fahrer beim Sitzen auf dem Sitz 12 und gleichzeitigem Benutzen der Pedaleinheit 14 eine ergonomische Position einnehmen. Um die Antriebskette 24 zu spannen, kann daran gedacht sein, das obere Umlenkzahnrad 32o an einem in Fahrtrichtung und entgegengesetzt der Fahrtrichtung beweglichen Kettenspanner 48 zu befestigen. Insbesondere ist der Kettenspanner 48 Teil der Umlenkung 36. Es ist jedoch auch möglich beide Umlenkzahnräder 32o, 32u an dem beweglichen Kettenspanner 48 zu befestigen, ebenso kann die Bewegungsrichtung des Kettenspanners 48 im Wesentlichen nicht parallel zur Fahrtrichtung verlaufen. Um einen besonders einfachen Aufbau des zweirädrigen Fahrzeugs zu erreichen können die Umlenkzahnräder 32o, 32u unabhängig von einem Kettenspanner an einem Rahmen des zweirädrigen Fahrzeugs angebracht sein. In diesem Fall kann das zweirädrige Fahrzeug einen Kettenspanner umfassen, welcher nicht eines der Umlenkzahnräder 32o, 32u trägt oder die Antriebskette 24 kann alleine durch eine geeignete Montage des Hinterrades 6 gespannt werden.

Die Umlenkung 36 weist den Abstand L3 zur Drehachse 20 des Vorderrades auf und die Umlenkung 36 weist den Abstand L4 zur Drehachse 22 des Hinterrades auf. Vorzugsweise ist L4 größer als L3, sodass die Umlenkung näher am Vorderrad als am Hinterrad angeordnet ist. Der erste Abschnitt des Antriebsstrangs verläuft vorzugsweise im Wesentlichen parallel zur Stehfläche, wobei bevorzugt wird, dass der erste Abschnitt des Antriebsstrangs unterhalb der Stehfläche verläuft. Dies wird bevorzugter Weise dadurch ermöglicht, dass der Höhenversatz Hv der Umlenkzahnräder 32u und 32o kleiner ist, als der doppelte Durchmesser D des größten Umlenkzahnrades der Umlenkzahnräder 32u, 32o, besonders bevorzugt kleiner als der Durchmesser D, höchst bevorzugt kleiner als 0,5 D ist (um die Darstellung zu verdeutlichen ist der Höhenversatz Hv in Figur 1 groß gewählt, ebenso sind die Umlenkzahnräder 32u und 32o in Figur 1 gleich groß dargestellt, jedoch ist keine dieser Angaben als Einschränkung anzusehen). Ferner ist in einer bevorzugten Ausführungsform der Höhenversatz kleiner als 10 cm, besonders bevorzugt kleiner als 5 cm, höchst bevorzugt kleiner als 1 cm. Die Anordnung der Umlenkzahnräder 32u, 32o ist vorzugsweise so gewählt, dass der obere Strang 38o der Antriebskette 24 und der untere Strang 38u der Antriebskette 24, zumindest abschnittsweise, beispielsweise in einem Abschnitt zwischen der Umlenkung 36 und dem Antriebszahnrad 30 oder in einem Abschnitt zwischen der Umlenkung 36 und dem angetriebenen Zahnrad 34, im Wesentlichen parallel zueinander und vorzugsweise voneinander beabstandet verlaufen. Hierdurch wird vorzugsweise ein unerwünschter Kontakt von einzelnen Abschnitten, beispielsweise dem oberen Strang 38o der Antriebskette 24 und dem unteren Strang 38u der Antriebskette 24, verhindert, wodurch eine Abnutzung durch Reibung der Antriebskette 24 oder ein Blockieren beziehungsweise Sperren der Antriebskette 24 in unerwünschten Kontaktpunkten verhindert wird. Vorteilhafterweise ist daran gedacht, die Drehachsen der Umlenkzahnräder beziehungsweise jedes einzelne Umlenkzahnrad 32u, 32o unterhalb der Stehfläche 10 anzuordnen. Vorzugsweise verläuft der erste Abschnitt des Antriebsstrangs 28 im Wesentlichen parallel zu einer Ebene auf der das zweirädrige Fahrzeug steht und somit im Wesentlichen parallel zu einer ebenen Verbindung der Straßenauflagepunkte des Hinterrades und des Vorderrades (somit verläuft der erste Abschnitt des Antriebsstrangs bei einer eben verlaufenden Straße vorzugsweise im Wesentlichen horizontal) .

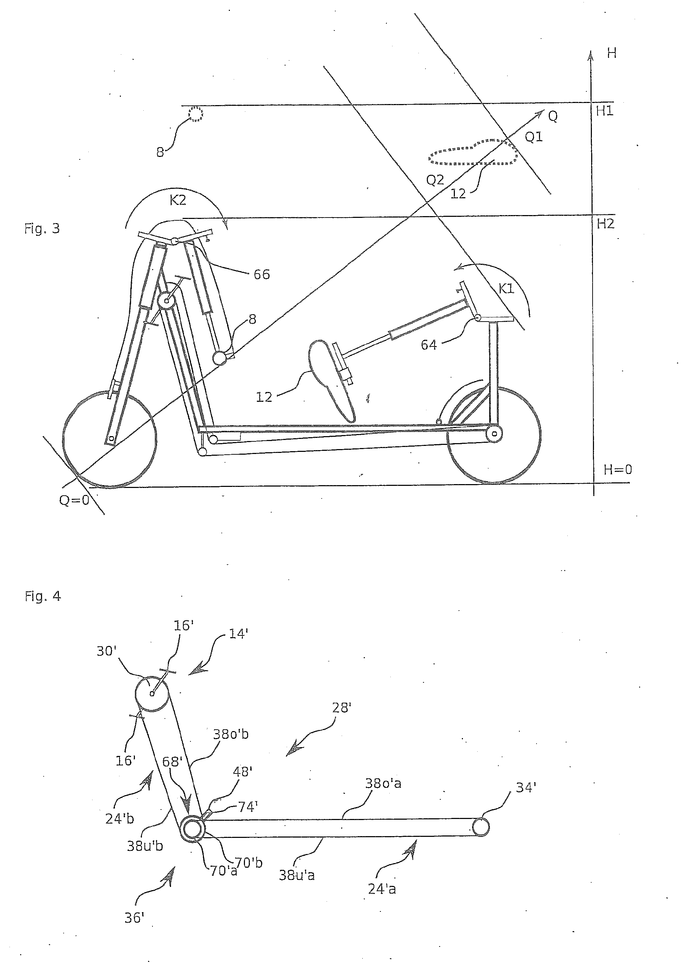

Damit der Fahrer in gewohnter Art und Weise wie beim Tretroller bremsen kann, ist das zweirädrige Fahrzeug mit einer Laufflächenbremse 50 am Hinterrad ausgestattet. Zusätzlich zu dieser vorteilhafterweise vorhandenen Laufflächenbremse 50 ist, um der erhöhten Geschwindigkeit des zweirädrigen Fahrzeugs im Vergleich zu einem Tretroller gerecht zu werden, entweder eine Rücktrittbremse wie in der in Figur 1 gezeigten ersten Ausführungsform , oder eine Scheibenbremse oder eine Felgenbremse am Hinterrad 6 vorgesehen. Am Vorderrad 4 kann eine Felgenbremse 52 mit einem Bremshebel 54 am Lenker 8 vorgesehen sein. Die Felgenbremse 52 kann jedoch durch eine Scheibenbremse oder eine Laufflächenbremse ersetzt werden. Um die Ergonomie des zweirädrigen Fahrzeugs zu erhöhen, lässt sich der Sitz 12 in seiner Höhe in Richtung des Doppelpfeils h nach oben und unten in einem, vorzugsweise mit einem Klemmmechanismus versehenen, Sattelrohr 56 in Verbindung mit einer Sattelstütze 58 verstellen. Um die Ergonomie in besonders starker Art und Weise zu erhöhen, ist der Sattel 12 vorzugsweise in und in entgegengesetzt der Fahrtrichtung (in , Richtung des Doppelpfeils I) verstellbar. Dies kann beispielsweise durch eine Schiene 60 mit einer Klemme 62 realisiert werden. Der Sitz 12 ist im Wesentlichen oberhalb der Drehachse 22 des Hinterrades, welche auch eine Rotationsachse des Hinterrades 6 ist, angeordnet. In Figur 1 ist das zweirädrige Fahrzeug in seinem Betriebszustand gezeigt. Um in den Transportzustand (siehe Fig. 3) überzugehen, wird zumindest der Sattel 12 vorzugsweise an einem Scharnier 64 in Richtung des Pfeils K1 auf die Stehfläche 10 abgeklappt, beim Übergang zurück in den Betriebszustand (die Position des Sitzes 12 im Betriebszustand ist gestrichelt angedeutet) wird eine entgegengesetzt gerichtete Bewegung ausgeführt. Das erste Scharnier 64 wird in dem Betriebszustand vorzugsweise durch eine Arretierung, beispielsweise eine Verschraubung, gesichert. In einer besonders bevorzugten Ausführungsform lässt sich auch der Lenker 8 vorzugsweise an einem zweiten Scharnier 66 abklappen. Vorzugsweise wird der Lenker 8 in Richtung des Pfeils K2 auf die Stehfläche 10 beim Übergang von dem Betriebszustand in den Transportzustand abgeklappt, beim Übergang zurück in den Betriebszustand (die Position des Lenker 8 im Betriebszustand ist gestrichelt angedeutet) wird eine entgegengesetzt gerichtete Bewegung ausgeführt. Im Transportzustand ist das Außenmaß Q2 in Richtung Q des zweirädrigen Fahrzeugs 2 gegenüber dem Außenmaß Q1 des zweirädrigen Fahrzeugs 2 im Betriebszustand verringert. Je nachdem auf welche Höhe der Sitz 12 und der vorzugsweise auch höhenverstellbare Lenker 8 eingestellt sind, ist auch die Höhe H2 (in Richtung H) des zweirädrigen Fahrzeugs 2 in dem Transportzustand geringer als die Höhe H1 des zweirädrigen Fahrzeugs 2 im Betriebszustand. Es ist zu beachten, dass sich der Abstand des Vorderrades zu dem Hinterrad, abgesehen von unwesentlichen Abstandsänderungen durch eine mögliche Lenkbewegung, nicht verändert. Somit bleibt der gesamte Aufbau des Antriebsstrangs und der Lenkung des zweirädrigen Fahrzeugs sowohl im Betriebszustand als auch im Transportzustand gleich. Hierdurch wird eine besonders einfache, stabile und kostengünstige, weil im zusammengeklappten Zustand nicht abgeänderte, Konfiguration der Lenkung und des Antriebs gewährleistet.

Es ist möglich, die Antriebskette 24 des Antriebsstrangs 28 alternativ durch einen Antriebsriemen zu ersetzen, wobei dann die Zahnräder 30, 32o, 32u und 34 durch geeignete Rollen ersetzt werden und der Kettenspanner 48 die Funktion eines Riemenspanners übernimmt.

In einem Betriebszustand ist das zweirädrige Fahrzeug 2 dazu eingerichtet, von dem Fahrer durch Abstoßen von einem Untergrund fortbewegt zu werden, beziehungsweise von dem Fahrer auf dem Sitz 12 sitzend durch Bewegen der Pedale 14 angetrieben zu werden.

Der Vergleich des in Figur 1 gezeigten Betriebszustands des zweirädrigen Fahrzeugs 2 mit dem in Figur 3 gezeigten Transportzustand des zweirädrigen Fahrzeugs 2 zeigt, dass ein Abstand des Vorderrades 4 zu dem Hinterrad 6 im Betriebszustand, genauso groß ist, wie ein Abstand des Vorderrades 4 zu dem Hinterrad 6 im Transportzustand. In Figur 1 ergibt sich der Abstand des Vorderrades 4 zu dem Hinterrad 6 als die Summe der Abstände L3 und L4.

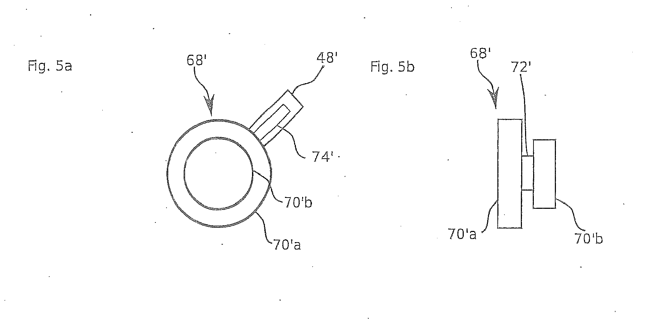

Im Folgenden wird eine zweite Ausführungsform des erfindungsgemäßen zweirädrigen Fahrzeugs unter Bezugnahme auf die Figuren 4, 5a und 5b beschrieben.

Die zweite Ausführungsform des erfindungsgemäßen zweirädrigen Fahrzeugs unterschiedet sich nur durch die Ausgestaltung eines Antriebsstrangs von der ersten Ausführungsform. Im Folgenden werden ausschließlich die Unterschiede zur ersten Ausführungsform beschrieben, für den weiteren Aufbau und alternativen des Aufbaus der zweiten Ausführungsform des erfindungsgemäßen zweirädrigen Fahrzeugs wird hiermit ausdrücklich auf die erste Ausführungsform verwiesen. Die Bezugszeichen für Elemente der zweiten Ausführungsform sind jeweils mit einem Apostroph versehen.

Wird bei der Beschreibung der zweiten Ausführungsform auf nicht in den Figuren 4, 5a und 5b gezeigte Elemente Bezug genommen, welche im Wesentlichen mit denen der ersten Ausführungsform übereinstimmen, so werden deren Bezugszeichen aus der ersten Ausführungsform verwendet.

In dem in Figur 4 gezeigten Antriebsstrang der zweiten Ausführungsform ist eine Pedaleinheit 14' mit einem Hinterrad 6 durch einen Antriebsstrang 28' verbunden, welcher eine erste Antriebskette 24'a, eine zweite Antriebskette 24'b, ein mit Pedalen 16' verbundenes Antriebszahnrad 30', ein Doppelzahnrad 68', sowie ein angetriebenes Zahnrad 34' umfasst. Die erste Antriebskette 24'a ist vorzugsweise von der zweiten Antriebskette 24'b verschieden.

Das Doppelzahnrad 68' ist Teil einer Umlenkung 36', welche den Antriebsstrang 28' in einen ersten Abschnitt, welcher von dem Hinterrad 6 zu der Umlenkung 36' verläuft, und einen zweiten Abschnitt, welcher von der Umlenkung 36' aufwärts zur Pedaleinheit 14' verläuft, unterteilt. Die Anordnung der Umlenkung 26' in Bezug auf das zweirädrige Fahrzeug in der zweiten Ausführungsform entspricht der Anordnung der Umlenkung 26 in Bezug auf das zweirädrige Fahrzeug in der ersten Ausführungsform.

Das Doppelzahnrad 68' umfasst ein erstes Zahnrad 70'a und ein zweites Zahnrad 70'b. Vorzugsweise umfasst der erste Abschnitt des Antriebsstrangs 28' das erste Zahnrad 70'a, das angetriebene Zahnrad 34' sowie die erste Antriebskette 24'a, welche das erste Zahnrad 70'a mit dem angetriebenen Zahnrad 34' verbindet. Ferner kann der zweite Abschnitt des Antriebsstrangs 28' das zweite Zahnrad 70'b, das Antriebszahnrad 30' sowie die zweite Antriebskette 24'b, welche das zweite Zahnrad 70'b mit dem Antriebszahnrad 30' verbindet, umfassen. Das erste Zahnrad 70'a und das zweite Zahnrad 70'b sind in Richtung einer gemeinsamen Drehachse gegeneinander versetzt und können bei separater Ausbildung über ein Verbindungselement 72' miteinander verbunden sein.

Das Doppelzahnrad 68' kann entweder direkt an einem Rahmen der zweiten Ausführungsform des erfindungsgemäßen zweirädrigen Fahrzeugs angebracht sein, oder Doppelzahnrad 68' kann an einem an diesem Rahmen befestigten Kettenspanner 48' angebracht sein. In einer besonders bevorzugten Ausführungsform umfasst der Kettenspanner 48' ein Langloch 74' um eine besonders einfache Arretierung des Kettenspanners, beispielsweise mit einer Schraube, zu ermöglichen und auch eine Führung einer Bewegung zumindest eines Teils des Kettenspanners 48' zu ermöglichen. Eine Befestigung des Kettenspanners 48' erlaubt vorzugsweise eine Bewegung des Doppelzahnrads 68', um die erste 24'a und zweite Antriebskette 24'b gleichzeitig zu spannen. Hierzu ermöglicht die Befestigung des Kettenspanners 48' bevorzugterweise eine Bewegung des Doppelzahnrads 68', welche weder parallel zu einer Verbindungslinie von Zentren des Doppelzahnrads 68' und des angetriebenen Zahnrads 34' noch parallel zu einer Verbindungslinie von Zentren des Doppelzahnrads 68' und des Antriebszahnrads 30' verläuft. Bei der in Figur 4 gezeigten Ausführungsform kann sich das Doppelzahnrad 68' entlang der Richtung des Langlochs 74' und somit unter einem Winkel von etwa 45° bezüglich der Verbindungslinie der Zentren des Doppelzahnrads 68' und des angetriebenen Zahnrads 34' sowie unter einem Winkel von etwa 60° bezüglich der Verbindungslinie der Zentren des Doppelzahnrads 68' und des Antriebszahnrads 30' bewegen.

Die Größe (der für die Umsetzung einer Drehbewegung eines Zahnrades in eine Antriebskettenbewegung maßgebliche Durchmesser des Zahnrades, bei gleichen Abmessungen der Kettenglieder der ersten 24'a und zweiten Antriebskette 24'b entspricht dies der Anzahl der an einem Zahnrad vorhandenen Zähne zum Eingriff in die Antriebskette) des Antriebszahnrads 30', des angetriebenen Zahnrads 34', des ersten Zahnrads 70'a und des zweites Zahnrads 70'b können derart gewählt werden, dass ein gewünschtes Übesetzunsverhältniss zwischen der Rotation des Antriebszahnrads 30' und des angetriebenen Zahnrads 34' eingestellt wird. Beispielsweise können das angetriebene Zahnrad 34' und das erste Zahnrad 70'a gleich groß gewählt werden, sodass der untere Strang 38u'a und der obere Strang 38o'a der ersten Antriebskette 24'a im Wesentlichen parallel zueinander verlaufen, wodurch der erste Abschnitt des Antriebsstrangs 28' platzsparend unter der Stehfläche 10 angeordnet werden kann. Insbesondere kann das Antriebszahnrad 30' größer als das zweite Zahnrad 70'b gewählt werden, wobei der untere Strang 38u'b und der obere Strang 38o'b der zweiten Antriebskette 24'b im Wesentlichen nicht parallel zueinander verlaufen. Das erste Zahnrad 70'a und das zweite Zahnrad 70'b können unterschiedlich groß ausgebildet sein, es besteht jedoch auch die Möglichkeit, sie gleichgroß auszubilden.

Ebenso wie in der ersten Ausführungsform kann in der zweiten Ausführungsform das Antribskonzept mittels Antriebsketten 24'a, 24'b und Zahnrädern 30', 34', 70'a, 70'b durch ein Antriebskonzept mittels Antribsriemen und Rollen ersetzt werden.

## Patentansprüche

1. Zweirädriges Fahrzeug (2), umfassend ein Vorderrad (4), ein Hinterrad (6), einen Lenker (8) zum Lenken des Fahrzeugs (2), eine Stehfläche (10), einen Sitz (12) und eine mit von der Stehfläche (10) separaten Pedalen (16; 16') versehene Pedaleinheit (14, 14'), wobei
das Fahrzeug (2) dafür eingerichtet ist, von einem Fahrer auf der Stehfläche (10) stehend durch Abstoßen von einem Untergrund fortbewegt zu werden, wobei
das Hinterrad (6) ferner dafür eingerichtet ist, von einem Fahrer auf dem Sitz (12) sitzend durch Bewegen der Pedale (16, 16') angetrieben zu werden, **dadurch gekennzeichnet,**
**dass** die Pedaleinheit (14; 14') näher an dem Vorderrad (4) als dem Hinterrad (6) angeordnet ist.

2. Zweirädriges Fahrzeug (2) nach Anspruch 1, **dadurch gekennzeichnet, dass** die Pedaleinheit (14, 14'), vorzugsweise ein Tretlager (18) der Pedaleinheit (14), oberhalb der Stehfläche (10) angeordnet ist.

3. Zweirädriges Fahrzeug (2) nach Anspruch 1 oder 2, **dadurch gekennzeichnet, dass** ein das Hinterrad (6) mit der Pedaleinheit (14 ; 14') verbindender Antriebsstrang (28; 28') eine Umlenkung (36; 36') aufweist, welche bevorzugt näher am Vorderrad (4) als am Hinterrad (6) angeordnet ist, sodass ein erster Abschnitt des Antriebsstrangs (28; 28') von dem Hinterrad (6) zu der Umlenkung (36; 36') verläuft und ein zweiter Abschnitt des Antriebsstrangs (28; 28') von der Umlenkung (36; 36') zu der Pedaleinheit (14; 14') verläuft, wobei der zweite Abschnitt des Antriebsstrangs (28; 28') aufwärts verläuft.

4. Zweirädriges Fahrzeug (2) nach Anspruch 3, **dadurch gekennzeichnet, dass** der Antriebsstrang (28; 28') eine Antriebskette (24; 24'a, 24'b) und die Umlenkung (36; 36'), bevorzugt für jeden Strang (38o, 38u) der Antriebskette (28) an der Umlenkung (36), ein Zahnrad (32o, 32u; 70'a, 70'b) umfasst.

5. Zweirädriges Fahrzeug (2) nach Anspruch 3 oder Anspruch 4, wobei der Antriebsstrang (28) eine einzelne Antriebskette (24) umfasst, welche in dem ersten Abschnitt des Antriebsstrangs (28) und in dem zweiten Abschnitt des Antriebsstrangs (28) verläuft.

6. Zweirädriges Fahrzeug (2) nach Anspruch 3, wobei der Antriebsstrang (28') eine erste Antriebskette (24'a), welche in dem ersten Abschnitt des Antriebsstrangs (28') verläuft, und eine zweite Antriebskette (24'b), welche in dem zweiten Abschnitt des Antriebsstrangs (28') verläuft, umfasst.

7. Zweirädriges Fahrzeug (2) nach Anspruch 6, **dadurch gekennzeichnet, dass** die Umlenkung (36') ein Doppelzahnrad (68') umfasst.

8. Zweirädriges Fahrzeug (2) nach einem der vorhergehenden Ansprüche, bei welchem das Hinterrad (6) eine Laufflächenbremse (50) und eine Bremse, ausgewählt aus einer Rücktrittbremse, einer Scheibenbremse und einer Felgenbremse, aufweist.

9. Zweirädriges Fahrzeug (2) nach einem der vorhergehenden Ansprüche, bei welchem das Vorderrad (4) eine Scheibenbremse, eine Laufflächenbremse oder eine Felgenbremse (52) aufweist.

10. Zweirädriges Fahrzeug (2) nach einem der vorhergehenden Ansprüche, wobei der Sitz (12) im Wesentlichen oberhalb einer Rotationsach - se (22) des Hinterrades (6) angeordnet ist und/oder vorzugsweise in seiner Höhe (h) oder/und in Fahrtrichtung (I) verstellbar angeordnet ist.

11. Zweirädriges Fahrzeug (2), vorzugsweise nach einem der vorherge - henden Ansprüche, mit einem Vorderrad (4), einem Hinterrad (6), einem Lenker (8) zum Lenken des Fahrzeugs (2) und einem Sitz (12), wobei das Fahrzeug (2) einen Transportzustand und einen Betriebszustand aufweist, wobei
im Betriebszustand mindestens ein Außenmaß (Q, H) des Fahrzeugs (2) größer ist als im Transportzustand,
wobei bei einem Übergang von dem Betriebszustand in den Transportzustand der Sitz (12) an dem Fahrzeug (2) abgeklappt wird,
**dadurch gekennzeichnet, dass** ein Abstand des Vorderrades (4) zu dem Hinterrad (6) in dem Betriebszustand und dem Transportzustand gleich groß ist.

12. Zweirädriges Fahrzeug (2) nach Anspruch 11, wobei bei einem Übergang von dem Betriebszustand in den Transportzustand der Sitz (12) an dem Fahrzeug (2) unter Verwendung eines ersten Scharniers (64) abgeklappt wird.

13. Zweirädriges Fahrzeug (2) nach Anspruch 11 oder 12, wobei bei einem Übergang von dem Betriebszustand in den Transportzustand der Lenker (8), bevorzugt unter Verwendung eines zweiten Scharniers (66), an dem Fahrzeug (2) abgeklappt wird.
